# EUROPEAN PATENT APPLICATION

(11) **EP 4 395 300 A1**
(43) Date of publication of application: **03.07.2024**
(21) Application number: 22861448.3
(22) Date of filing: 25.08.2022
(51) Int. Cl.: H04N 5/64

(54) **DISPLAY DEVICE**

(30) Priority: 27.08.2021 CN 202110994150
(71) Applicant: Panasonic Intellectual Property Management Co., Ltd., Kadoma-shi, Osaka 571-0057 (JP)
(72) Inventor: OGAWA, Suguru, Kadoma-shi, Osaka 571-0057 (JP); LIU, Xiaobin, Xiamen, 361006 (CN); SU, Guoyang, Xiamen, 361006 (CN); MORI, Yoshiteru, Xiamen, 361006 (CN)
(74) Representative: Novagraaf International SA
(86) International application number: PCT/JP2022/032112
(87) International publication number: WO 2023/027160

(57) **Abstract**

A display apparatus (HMD (100)) is used by being worn by a user (99) and includes: two lens barrels each including a closed bottom; eye cups in a barrel shape and disposed along open ends of the lens barrels; bendable temple parts that support the lens barrels by being worn by the user (99) in an extended state; a detector that detects whether the display apparatus is worn by the user (99); and a drive mechanism that changes an orientation of the eye cups from a first orientation to a second orientation when the detector detects removal of the display apparatus from the user (99). The first orientation is an orientation which allows the user (99) to wear the display apparatus and in which the eye cups interfere with the temple parts when bent. In the second orientation, the eye cups do not interfere with the temple parts when bent.

## Description

### [Technical Field]

The present disclosure relates to a display apparatus.

### [Background Art]

Recent years have seen active developments of display apparatuses that are worn on the head, commonly known as head-mounted displays. For example, Patent Literature (PTL) 1 discloses a head-mounted display capable of presenting (i.e., displaying) video of content and video of the external world. The head-mounted display disclosed in PTL 1 can reduce the sense of unnaturalness felt by the user upon switching between the video of the content and the video of the external world, by adjusting the luminance of at least one of the video of the content or the video of the external world.

### [Citation List]

### [Patent Literature]

[PTL 1] Japanese Unexamined Patent Application Publication No. 2016-090773

### [Summary of Invention]

### [Technical Problem]

A display apparatus such as a head-mounted display may be inappropriately configured from the viewpoint of usage by a user.

The present disclosure has been made in view of the above, and an object of the present disclosure is to provide a display apparatus that is configured more appropriately.

### [Solution to Problem]

To achieve the object described above, a display apparatus according to an aspect of the present disclosure is a display apparatus used by being worn by a user, the display apparatus including: two lens barrels one of which includes a closed bottom and, on the closed bottom, a display device that displays a first image, and another one of which includes a closed bottom and, on the closed bottom, another display device that displays a second image; eye cups each of which is in a shape of a barrel and is disposed along an open end of a corresponding lens barrel among the two lens barrels; temple parts that are bendable and support the two lens barrels by being worn by the user in an extended state; at least one detector that detects whether the display apparatus is being worn by the user; and at least one drive mechanism that changes an orientation of at least one eye cup among the eye cups from a first orientation to a second orientation when the at least one detector detects a state in which the display apparatus is removed from the user, wherein the first orientation is an orientation which allows the user to wear the display apparatus and is an orientation in which interference occurs between the at least one eye cup and at least one temple part among the temple parts when the at least one temple part is in a bent state, and the second orientation is an orientation in which no interference occurs between the at least one eye cup and the at least one temple part when the at least one temple part is in the bent state.

### [Advantageous Effects of Invention]

The present disclosure provides a display apparatus that is configured more appropriately.

### [Brief Description of Drawings]

[FIG. 1]

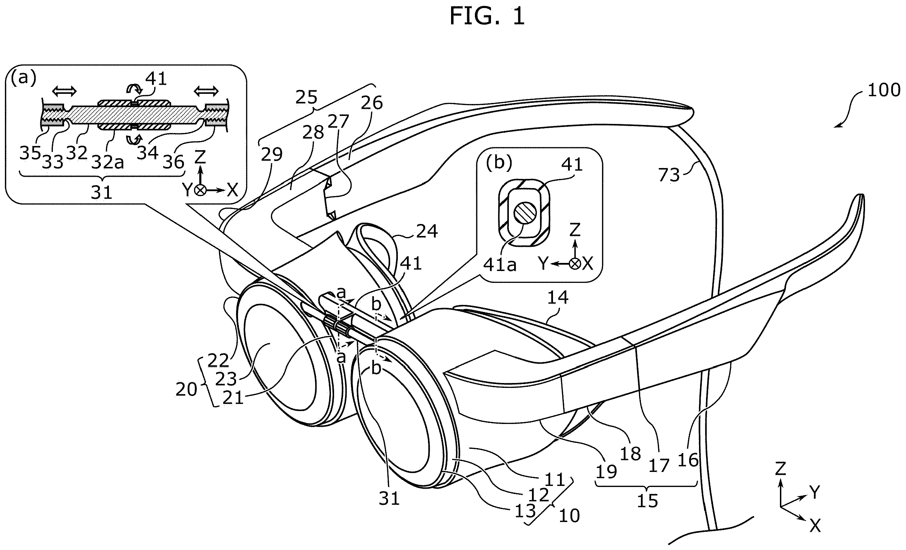

   FIG. 1 is a perspective view of a head-mounted display according to an embodiment.
[FIG. 2]

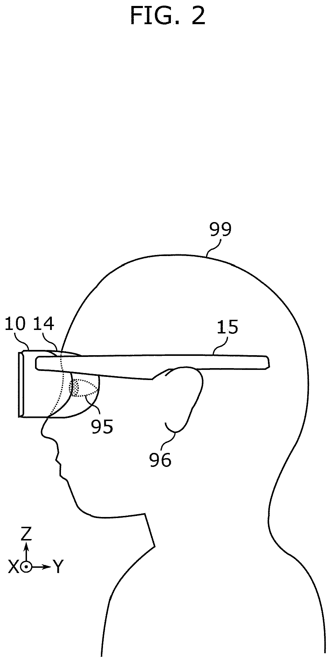

   FIG. 2 is a diagram illustrating an example of the head-mounted display being worn by a user according to the embodiment.
[FIG. 3A]

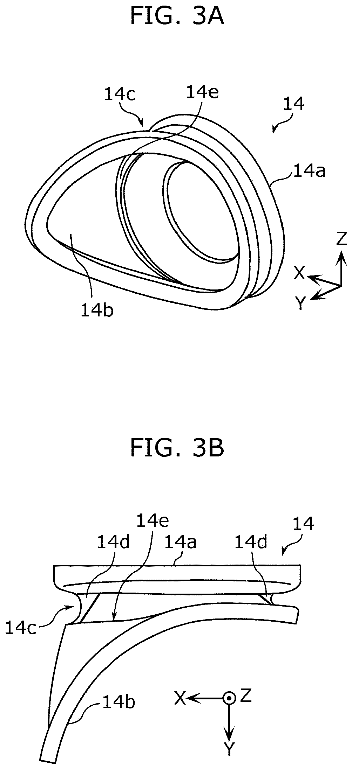

   FIG. 3A is a perspective view illustrating an eye cup of the head-mounted display according to the embodiment.
[FIG. 3B]
   FIG. 3B is a top view illustrating the eye cup of the head-mounted display according to the embodiment.
[FIG. 4]

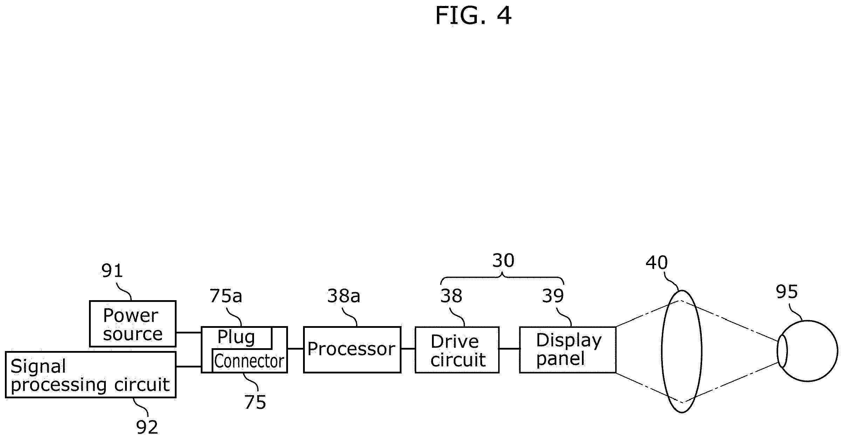

   FIG. 4 is a block diagram illustrating a functional configuration of a display system including the head-mounted display according to the embodiment.
[FIG. 5A]

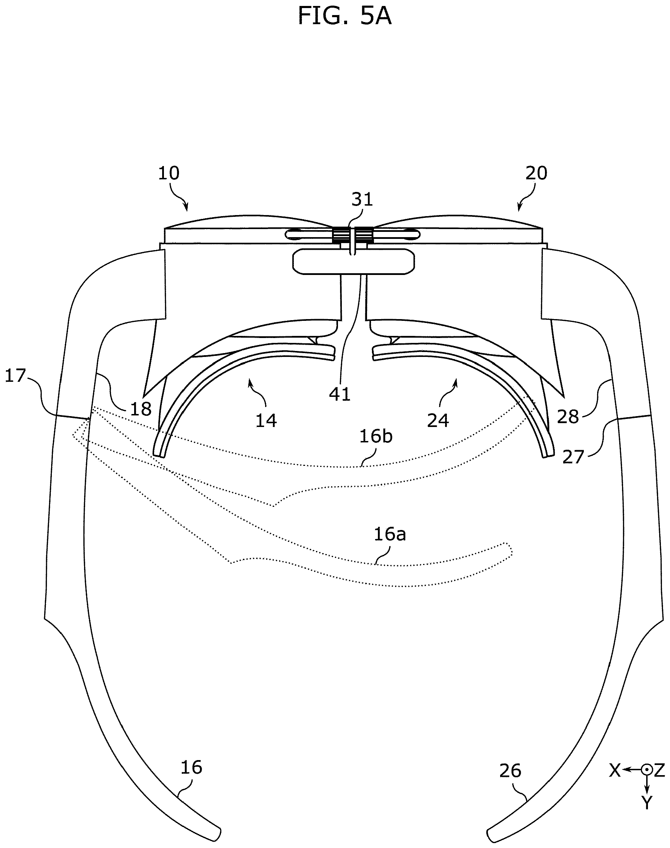

   FIG. 5A is a top view of the head-mounted display according to the embodiment.
[FIG. 5B]

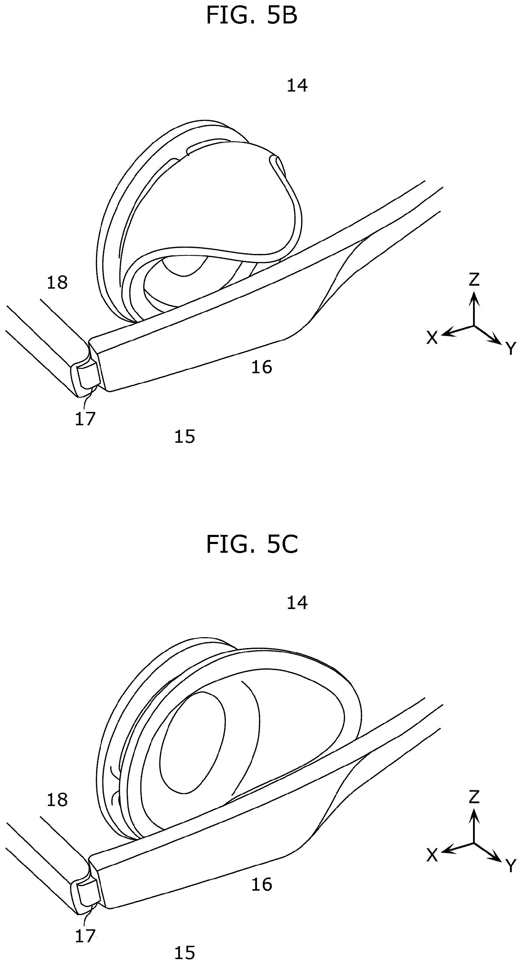

   FIG. 5B is a first diagram for describing an example of the orientation of the eye cup of the head-mounted display according to the embodiment.
[FIG. 5C]
   FIG. 5C is a second diagram for describing an example of the orientation of the eye cup of the head-mounted display according to the embodiment.
[FIG. 6]

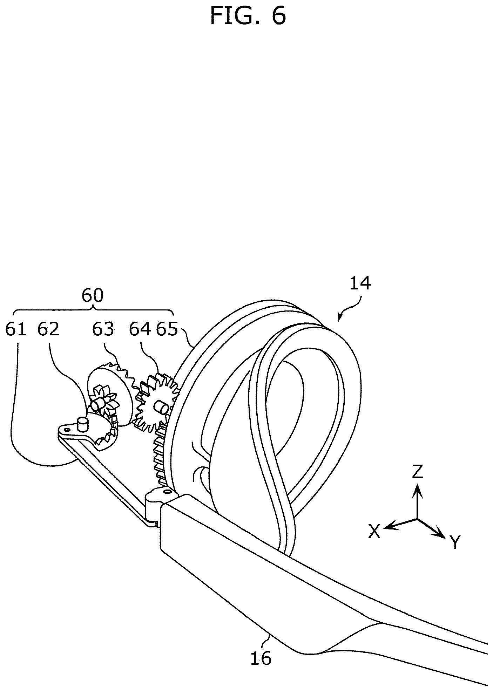

   FIG. 6 is a perspective view illustrating a drive mechanism of the head-mounted display according to the embodiment.
[FIG. 7]

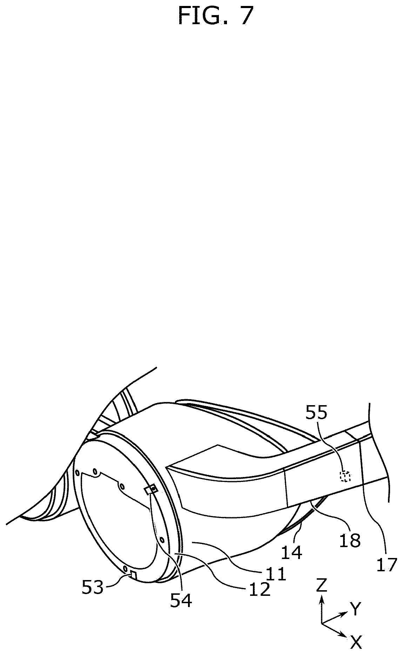

   FIG. 7 is a first diagram for describing a configuration of a sensor of the head-mounted display according to the embodiment.
[FIG. 8]

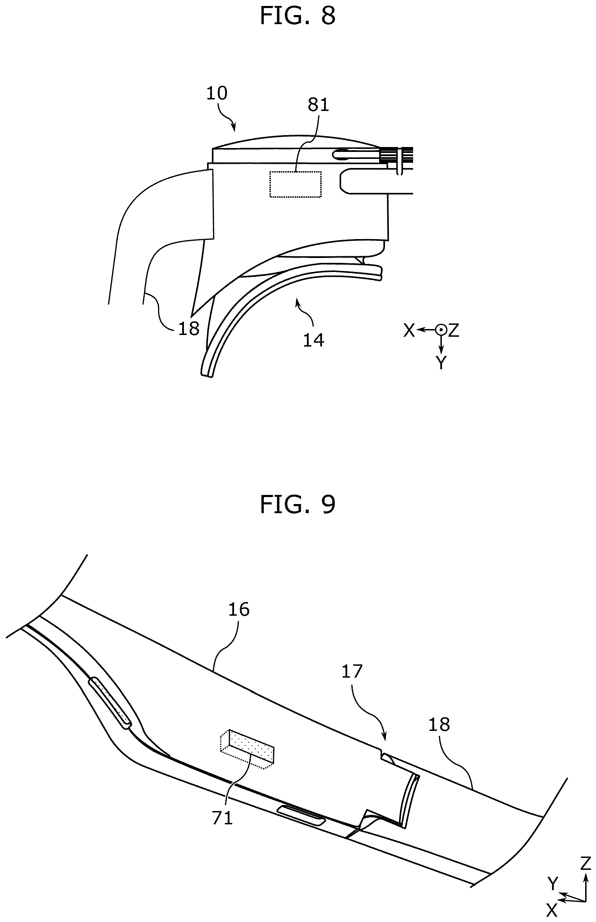

   FIG. 8 is a second diagram for describing a configuration of a sensor of the head-mounted display according to the embodiment.
[FIG. 9]
   FIG. 9 is a third diagram for describing a configuration of a sensor of the head-mounted display according to the embodiment.
[FIG. 10]

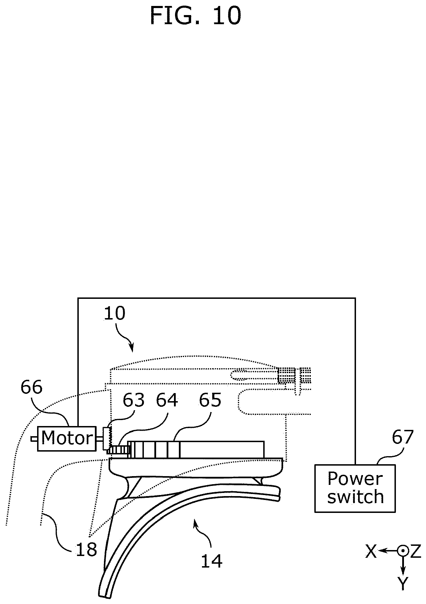

   FIG. 10 is a fourth diagram for describing a configuration of a sensor of the head-mounted display according to the embodiment.

### [Description of Embodiments]

### (Underlying Knowledge Forming Basis of the Present Disclosure)

In recent years, there have been developed display apparatuses capable of allowing a user to visually recognize an image displayed on an apparently large screen by placing display devices in front of the eyes of the user when being worn on the head of the user. Such display apparatuses are called head-mounted displays (HMDs), and many head-mounted displays have been developed in accordance with a high-resolution, high-performance policy because of their properties allowing an image to be visually recognized on an apparently large screen in perspective. Thus, many head-mounted displays have a large housing. Such large HMDs have problems with, for example, its portability and weight for use in public spaces such as trains, offices, and outdoor spaces.

In view of the above circumstances, the present disclosure provides a glasses-type HMD that includes two barrel-shaped housings (hereinafter, referred to also as lens barrels) with which minimum areas of two display devices (displays, etc.) corresponding to the right and left eyes of the user are covered so as to address the problems of, for example, the portability and weight of the HMD which is a display apparatus. Such a glass-type HMD is aesthetically excellent and looks as if the user is wearing large sunglasses. The glasses-type HMD is thus expected to be inconspicuous among people and capable of naturally blending with the surroundings.

Here, as an advanced configuration of such a glass-type HMD for increasing its portability, making its temple parts bendable is effective. However, to increase the portability by folding such temple parts (i.e., to make the temple parts compact), there is a structural problem with the HMD. This will be described below specifically.

To allow a user to visually recognize a video by emitting light toward eyes of the user as with an HMD, it is necessary to curb influence of outside light as much as possible. Therefore, an HMD may be provided with eye cups to bring spaces between the HMD and the peripheries of eyes of a user to a substantially sealed state. Such eye cups are made to tightly close spaces between the HMD and the eyes of the user. Therefore, the eye cups are made to cover spaces that gradually expand between the HMD and a head of the user from between the eyes toward lateral sides of the eyes. That is, the eye cups are formed with portions that protrude long from the HMD toward the user in accordance with a shape of the head of the user.

At the same time, with consideration given to arrangement of the eyes and ears of the user, temple parts are provided outside two lens barrels corresponding to the two eyes in an arrangement direction of the two lens barrels. That is, the temple parts and the portions of the eye cups protruding long are provided along the arrangement direction of the lens barrels. As a result, a bending mechanism needs to be designed such that, when the temple parts are bent inward (i.e., toward the lens barrels) to make the HMD compact, the temple parts do not interfere with the portions of the eye cups protruding long. That is, hinge portions for bending the temple parts are provided at positions closer to the user at least than the portions of the eye cups protruding long. Such a design of the hinge portions requires spaces having a length from tips of the lens barrels to the hinge portions viewed from the user's side. Thus, even when the temple parts are bent, it cannot be said that the HMD has a sufficiently high portability. In the present disclosure, in view of the above, an HMD having an increased portability will be described.

Note that general or specific aspects of the present disclosure may be implemented as a system, a method, an integrated circuit, a computer program, or a computer-readable recording medium such as a CD-ROM, or as any combination of systems, methods, integrated circuits, computer programs, and recording media.

Hereinafter, embodiments of the present disclosure will be described with the drawings.

Note that the embodiments described below each illustrate a general or specific example. The numerical values, shapes, materials, constituent elements, the arrangement and connection of the constituent elements, steps, the processing order of the steps, etc., illustrated in the embodiments below are mere examples, and do not intend to limit the scope of the claims. Furthermore, among the constituent elements in the following embodiments, constituent elements not recited in the independent claim will be described as optional constituent elements.

Note that the drawings are not necessarily precise illustrations. In the figures, the same reference signs are given to essentially the same constituent elements, and redundant descriptions are omitted or simplified.

It should be noted that, in the present specification, terms indicating a relationship between elements, such as "parallel" and terms indicating the shape of an element, such as "rectangular" as well as numerical values and numerical ranges are not expressions that express stringent meanings but expressions each including a range that is considered to be substantially the same, for example, a discrepancy such as a margin of error on the order of several percent.

In the figures used in the following description, the X axis, the Y axis, and the Z axis that are orthogonal to one another will be used for describing the direction of each element of an HMD. The X-axis direction is the right-left direction of the user wearing the HMD. In particular, the left side as viewed from the user will be defined as the positive side in the X-axis direction.

The Y-axis direction is the front-rear direction of the user wearing the HMD. In particular, the rear side as viewed from the user will be defined as the positive side in the Y-axis direction. The Z-axis direction is an up-down direction of the user wearing the HMD. In particular, the upper side as viewed from the user will be defined as the positive side in the Z-axis direction.

The X-axis direction matches an arrangement direction of two lens barrels that are included in the HMD in an embodiment and are arranged corresponding to the right and left eyes of the user. The Y-axis direction is the direction parallel to the barrel axis (or the central axis) direction of the lens barrels of the HMD according to the embodiment. A plane passing through the central axis of each of the two lens barrels will be referred to as an arrangement plane of the lens barrels (or simply an arrangement plane). The arrangement plane is a plane that is normally parallel to the YX plane. The Z-axis direction, which is perpendicular to the arrangement plane, may be called a height direction.

Hereinafter, the right-left direction, the front-rear direction, and the up-down direction described above, and the barrel axis direction, the central axis direction, the arrangement direction, the arrangement plane, and the height direction described above may be used in the description without specific notice. Note that the expression of these directions and the like is used for the sake of convenience in the description and should not be construed as limiting the orientation of the HMD in use.

Many constituent elements of the HMD according to the present embodiment have structures that are in bilaterally symmetric combination. Therefore, the description of some constituent elements may be given only of one of bilateral combination, and the description of the other may be omitted.

### [Embod iment]

### [Basic Configuration]

First, a basic configuration of an HMD in an embodiment will be described with reference to FIG. 1 to FIG. 4. FIG. 1 is a perspective view of a head-mounted display according to the embodiment. FIG. 2 is a diagram illustrating an example of the head-mounted display being worn by a user according to the embodiment.

As illustrated in FIG. 1, HMD 100 according to the embodiment includes first lens barrel 10, second lens barrel 20, adjusting mechanism 31, support member 41, first temple part 15, second temple part 25, first eye cup 14, and second eye cup 24.

First lens barrel 10 is a display module for a single eye that displays, for example, an image for the left eye of user 99 (see FIG. 2 described later). First lens barrel 10 is formed by assembling resin and metallic materials. First lens barrel 10 includes therein a first display device (part of display device 30 in FIG. 4 described later) that displays a first image for one of eyes 95 (see FIG. 2 described later, the left eye in this case) of user 99 and a first convex lens (part of convex lens 40 in FIG. 4 described later) that enlarges an image displayed on the first display device. Specifically, first lens barrel 10 includes a closed bottom and the first display device on the closed bottom.

First lens barrel 10 includes first main portion 11, first sub portion 12, and first panel 13. As illustrated in the figure, first lens barrel 10 has a double-bottom structure including first main portion 11, first sub portion 12, and first panel 13. As illustrated in the figure, first main portion 11, first sub portion 12, and first panel 13 are formed of different members. In the following description, first lens barrel 10 will be described as having a double closed bottom. However, first lens barrel 10 in the HMD according to the present disclosure may have a single closed bottom simply with first main portion 11 only. There is no particular limitation on the configuration of the bottom of first lens barrel 10. The HMD can be provided with a configuration having a plurality of bottoms accommodating a plurality of functional units.

The first display device and the first convex lens are disposed inside first main portion 11, which is in a shape of a barrel opened toward the positive side in the Y-axis direction. Note that the first convex lens may be formed of one lens or may be formed by assembling two or more lenses. In other words, the first convex lens may be a lens unit including a plurality of lenses.

Second lens barrel 20 is a display module for a single eye that displays, for example, an image for the right eye of user 99. Second lens barrel 20 is formed by assembling resin and metallic materials. Second lens barrel 20 includes therein a second display device (part of display device 30 in FIG. 4 described later) that displays a second image for the other of the eyes 95 (the right eye in this case) of user 99 and a second convex lens (part of convex lens 40 in FIG. 4 described later) that enlarges an image displayed on the second display device. Specifically, second lens barrel 20 includes a closed bottom and the second display device on the closed bottom.

Second lens barrel 20 includes second main portion 21, second sub portion 22, and second panel 23. The second display device and the second convex lens are disposed inside second main portion 21, which is in a shape of a barrel opened toward the positive side in the Y-axis direction.

First lens barrel 10 and second lens barrel 20 are connected to each other by adjusting mechanism 31 and support member 41.

Support member 41 is a rod-shaped member which is elongated in the arrangement direction and of which the outer diameter is smaller than the inner diameters of a hole formed in first lens barrel 10 and a hole formed in second lens barrel 20. For example, support member 41 is formed of a metallic material such as aluminum or stainless steel. Support member 41 is inserted into holes that are formed in the lens barrels. As a result, support member 41 supports first lens barrel 10 and second lens barrel 20. The positional relationship between first lens barrel 10 and second lens barrel 20 is changed based on a length of the insertion of support member 41 into the holes formed in the lens barrels. Support member 41 is formed with an inner space. For example, the inner space accommodates internal wiring 41a, as illustrated as a circular section in part (b) of the figure, illustrating a sectional view taken along line b-b.

As in HMD 100 according to the present embodiment, support member 41 is one of limited components that connect first lens barrel 10 and second lens barrel 20 and thus is used for disposing a component for communication necessary between first lens barrel 10 and second lens barrel 20, such as internal wiring 41a described above. Further, similar internal wiring may be accommodated in a space that is provided inside adjusting mechanism 31. A wire member used for the wiring is a component that disfigures the HMD when disposed at a location visible as its appearance, and is a component that has the risk of disconnection or the like. Therefore, by accommodating the wire member inside another component in this manner, the disfigurement can be avoided, and in addition, the possibility of functional breakage such as disconnection can be decreased.

As illustrated in the sectional view provided in part (a) of the figure, illustrating a sectional view taken along line a-a, adjusting mechanism 31 provided between first lens barrel 10 and second lens barrel 20 includes adjusting member 32 that is elongated in the X-axis direction, threaded hole 36 that is embedded in first lens barrel 10 and has a thread groove in a first helical shape, and threaded hole 35 that is embedded in second lens barrel 20 and has a thread groove in a second helical shape. Adjusting member 32 is threaded at its both end portions in the X-axis direction. Specifically, adjusting member 32 includes, at its one end on the positive side in the X-axis direction, thread portion 34 formed with a thread in the first helical shape and includes, at the other end on the negative side in the X-axis direction, thread portion 33 formed with a thread in the second helical shape.

The thread portions are screwed into the corresponding threaded holes embedded in first lens barrel 10 and second lens barrel 20, and the thread portions are inserted into or removed from the threaded holes by rotating adjusting member 32 about the axis parallel to the X-axis direction.

These threaded holes are provided in, for example, first sub portion 12 of first lens barrel 10 and second sub portion 22 of second lens barrel 20. In particular, providing the threaded hole on the inner side of first sub portion 12 or second sub portion 22 from a surface of first sub portion 12 or second sub portion 22 by a sufficient length makes it difficult for the thread portion to project from first sub portion 12 or second sub portion 22 when the thread portion is inserted or removed. This makes HMD 100 aesthetically excellent and additionally inhibits the occurrence of a malfunction of adjusting mechanism 31 due to the intrusion of a foreign object.

Adjusting member 32 is equipped, in the vicinity of its central portion in its longitudinal direction, with knob member 32a for improving the operability of adjusting member 32. Knob member 32a is a member in a shape of a barrel, and the inner diameter of knob member 32a matches the outer diameter of adjusting member 32. Accordingly, knob member 32a is fixed by, for example, press-fitting adjusting member 32 into knob member 32a, and adjusting member 32 becomes thicker by the thickness of knob member 32a. This improves the operability in rotating adjusting member 32.

Knob member 32a is constituted by two members divided into two in the X-axis direction, with a fixing member interposed therebetween. Here, the fixing member is part of support member 41 protruding from a main portion of support member 41 toward the adjusting member. The fixing member protruding from the main portion of support member 41 has an insertion hole of which the inner diameter is sufficiently larger than the outer diameter of adjusting member 32 (i.e., a gap is provided at least not to bring the fixing member and adjusting member 32 into contact with each other). Adjusting member 32 is inserted into the insertion hole of the fixing member, and the two members of knob member 32a are press-fitted in such a manner as to sandwich the fixing member from both sides of the fixing member in the X-axis direction.

Accordingly, adjusting member 32 is rotatable about the axis parallel to the X-axis direction even in a state of being inserted into the fixing member, and the contact of knob member 32a with the fixing member fixes the relative position of adjusting member 32 with respect to the fixing member in the X-axis direction. Further, since adjusting member 32 is inserted into the insertion hole of the fixing member, the relative movement of adjusting member 32 with respect to the fixing member is restricted also in the Z-axis direction and the Y-axis direction.

Thus, since the fixing member is present, the relative position of adjusting member 32 in the X-axis direction with respect to support member 41 is fixed.

First temple part 15 has a front end portion connected to first main portion 11 of first lens barrel 10 and a rear end portion to be hung on, for example, the pinna of the left ear of user 99. First temple part 15 is formed of resin and metal in combination. First temple part 15 is formed by connecting first front temple part 18 on a front end side of first temple part 15, cover 19 provided on a front end side of first front temple part 18, and first rear temple part 16 on a rear end side of first temple part 15 together pivotably via hinge portion 17. Hinge portion 17 includes a rod-shaped member that serves as a pivot shaft, a connection member that connects first front temple part 18 pivotably to the rod-shaped member, and a connection member that connects first rear temple part 16 pivotably to the rod-shaped member.

Cover 19 is configured to transmit beams of light having some wavelength, thus enabling, for example, capturing an image of an outside by a camera provided inside cover 19.

First temple part 15 is bendable through pivoting of first rear temple part 16 with respect to first front temple part 18 about an axis parallel to the Z axis in the figure. To use HMD 100, HMD 100 is worn by user 99 with this bending mechanism being extended. First temple part 15 is bendable only in the direction of approaching second temple part 25 described later (counterclockwise as viewed from the positive side in the Z-axis direction) and does not pivot in the opposite direction. This improves the ease of hanging first temple part 15 on ear 96 of user 99.

Second temple part 25 has a front end portion connected to second main portion 21 of second lens barrel 20 and a rear end portion to be hung on, for example, the pinna of the right ear of user 99. Second temple part 25 is formed of resin and metal in combination. Second temple part 25 is formed by connecting second front temple part 28 on a front end side of second temple part 25, cover 29 provided on a front end side of second front temple part 28, and second rear temple part 26 on a rear end side of second temple part 25 together pivotably via hinge portion 27. Hinge portion 27 includes a rod-shaped member that serves as a pivot shaft, a connection member that connects second front temple part 28 pivotably to the rod-shaped member, and a connection member that connects second rear temple part 26 pivotably to the rod-shaped member.

Cover 29 is configured to transmit beams of light having some wavelength, thus enabling, for example, capturing an image of an outside by a camera provided inside cover 29.

Wiring 73 is connected to second temple part 25 and linked to internal wiring that passes through second rear temple part 26, hinge portion 27, and second front temple part 28. The internal wiring further passes through the inner spaces of second lens barrel 20 and support member 41, extending to first lens barrel 10. In such a manner, wiring 73 is electrically connected to the internal wiring of HMD 100. Wiring 73 is supplied, from external devices, with electric power for driving HMD 100 and signal information that represents content to be presented to user 99 with HMD 100.

Second temple part 25 is bendable through pivoting of second rear temple part 26 with respect to second front temple part 28 about an axis parallel to the Z axis in the figure. To use HMD 100, HMD 100 is worn by user 99 with this bending mechanism being extended, as in first temple part 15. Second temple part 25 is bendable only in the direction of approaching first temple part 15 described above (clockwise as viewed from the positive side in the Z-axis direction) and does not pivot in the opposite direction. This improves the ease of hanging second temple part 25 on ear 96 of user 99.

As illustrated in FIG. 1, first temple part 15 and second temple part 25 are curved in such a manner that the rear ends of first temple part 15 and second temple part 25 approach each other. In other words, the temple parts are curved toward the inside of HMD 100 where the head of user 99 is located. This causes first temple part 15 and second temple part 25 to press the back of the head of user 99 inward and forward, pulling first lens barrel 10 and second lens barrel 20 such that first lens barrel 10 and second lens barrel 20 are pushed against the head of user 99. The curved shapes of first temple part 15 and second temple part 25 therefore inhibit worn HMD 100 from dropping off, contributing to improvement in wearability.

First eye cup 14 is a member in a barrel shape that is interposed between first lens barrel 10 and the head of user 99. First eye cup 14 is removably attached to first lens barrel 10. For example, in a case where HMD 100 is used by a plurality of users 99, only replacement of first eye cup 14 inhibits indirect contact between users 99 via first lens barrel 10. First eye cup 14 is attached by inserting first eye cup 14 from an opening side of first main portion 11 of first lens barrel 10 toward the negative side in the Y-axis direction. As a result, first eye cup 14 projects outward of an open end of first lens barrel 10 (i.e., toward user 99) and is provided along the open end. As can be understood from the above, first eye cup 14, which is a main object that comes into contact with user 99, can be removed and, for example, washed. Therefore, HMD 100 can be kept clean without washing whole HMD 100.

Second eye cup 24 is a member in a barrel shape that is interposed between second lens barrel 20 and the head of user 99. Second eye cup 24 is removably attached to second lens barrel 20. For example, in a case where HMD 100 is used by a plurality of users 99, only replacement of second eye cup 24 inhibits indirect contact between users 99 via second lens barrel 20. Second eye cup 24 is attached by inserting second eye cup 24 from an opening side of second main portion 21 of second lens barrel 20 toward the negative side in the Y-axis direction. As a result, second eye cup 24 projects outward of an open end of second lens barrel 20 (i.e., toward user 99) and is provided along the open end. As can be understood from the above, second eye cup 24, which is a main object that comes into contact with user 99, can be removed and, for example, washed. Therefore, HMD 100 can be kept clean without washing whole HMD 100.

Note that the barrel shapes of first eye cup 14 and second eye cup 24 described above are not necessarily a perfect barrel. For example, the barrel shapes may be in a curved plate shape or the like that is partly opened as viewed in its barrel axis direction. However, these eye cups may have a shape with which the spaces between HMD 100 and eyes 95 of user 99 are widely covered as illustrated in, for example, FIG. 2 to deliver light from the display devices of HMD 100 to eyes 95 of user 99 under reduced influence of outside light. For that reason, first eye cup 14 and second eye cup 24 according to the present embodiment are in barrel shapes that encompass the open ends of first lens barrel 10 and second lens barrel 20, respectively.

FIG. 3A is a perspective view illustrating the eye cup of the head-mounted display according to the embodiment. FIG. 3B is a top view illustrating the eye cup of the head-mounted display according to the embodiment.

The eye cup according to the present embodiment inhibits direct contact between user 99 and the first lens barrel. The eye cup covers one of eyes 95 of user 99. The eye cup is interposed between user 99 and a lens barrel and fills the space between user 99 and the lens barrel. The eye cup is formed of a material that is lightproof and elastically deformable such as silicon rubber. The eye cup may be formed of a sponge-like resin material.

As illustrated in FIG. 3A and FIG. 3B, first eye cup 14 according to the present embodiment includes first insertion part 14a in a shape of a barrel that is inserted into first lens barrel 10, particularly first main portion 11, and also includes first cup part 14b that extends outward of the barrel (toward the positive side in the Y-axis direction) from an end portion of first main portion 11 on its opening side and has a curved plate shape of a size that makes first cup part 14b reach the head of user 99 at the time of wearing HMD 100. First cup part 14b makes a curve along a curve from the periphery of eye 95 to the temple of user 99. Therefore, as illustrated in FIG. 3B, first eye cup 14 includes a first part (the right side in the figure) extending by a first length from first lens barrel 10 in the barrel axis direction of first lens barrel 10 and a second part (the left side in the figure) extending by a second length, which is greater than the first length, from first lens barrel 10 in the barrel axis direction of first lens barrel 10, and the first part and the second part are connected in a shape of a barrel that shares the barrel axis direction with first lens barrel 10. The first length corresponds to a distance between first lens barrel 10 and a head surface (the root of a nose) on the inner corner side of eye 95 of user 99. The second length corresponds to a distance between first lens barrel 10 and a head surface (a temple) on the outer corner side of eye 95 of user 99.

First cup part 14b has a planar shape on its contact end side on which first cup part 14b comes into contact with user 99, so as to increase the contact area of first cup part 14b. Here, first cup part 14b continuously covers the space between the curved contact end conforming to the head of user 99 and a connection end at which first cup part 14b is connected to first insertion part 14a. This gives first cup part 14b a function of connecting first lens barrel 10 and the head of user 99 separated from each other to prevent the outside light from entering the user's sight.

Between first insertion part 14a and first cup part 14b, first narrow portion 14c having an outer circumference that is smaller than the outer circumference of first insertion part 14a and the outer circumference of first cup part 14b is formed. In other words, first narrow portion 14c is a thin portion at which the overall outer surface of first eye cup 14 is narrow. The formation of first narrow portion 14c gives first eye cup 14 flexibility that allows first eye cup 14 to be bent in the up-down direction and the right-left direction. Here, the flexibility of first eye cup 14 in the up-down direction is useful because such flexibility has the effect of increasing the wearability for user 99 without influencing the lateral parallax of HMD 100, but the flexibility of first eye cup 14 in the right-left direction may influence the lateral parallax of HMD 100.

For that reason, first eye cup 14 is formed with first thick portions 14d that expand the outer circumference of first eye cup 14 outward, at locations where first narrow portion 14c intersects a line passing the center of the narrow portion in its height direction and extends in the arrangement direction (i.e., locations where first narrow portion 14c intersects the arrangement plane). First thick portions 14d are formed integrally with first eye cup 14 in such a manner as to bury first narrow portion 14c on the arrangement plane. First thick portions 14d each have a taper shape of which the diameter increases as the taper shape extends toward the negative side of first lens barrel 10 in the Y-axis direction. First cup part 14b thus presses first thick portions 14d toward the negative side in the Y-axis direction on their one end sides on which their tapers are decreased in diameter, and the pressure of the pressing is supported on their other end sides on which the tapers are increased in diameter. That is, the supports are made small and more specified and function in such a manner as to promote a bend of first cup part 14b in a direction separating from the supports. As a result, first cup part 14b bends easily in the up-down direction.

First thick portions 14d support first cup part 14b from the first insertion part 14a side in such a manner as to oppose a bend of first eye cup 14 in the right-left direction. Further, in order to reinforce such support for first cup part 14b, first cup part 14b includes first flat portion 14e that extends outward of first thick portions 14d along the XZ plane intersecting the central axis of first lens barrel 10 and is connected to the first cup part. This forms a seesaw-like structure in which a bend of first eye cup 14 is supported by first flat portion 14e, thereby strongly inhibiting a bend in the right-left direction and facilitating a bend in the up-down direction while the shape of first cup part 14b is maintained.

In addition, the eye cup may be provided with a vent for inhibiting a space formed between the eye cup and user 99 from being dense with moisture.

With reference to FIG. 4, the functional configuration of HMD 100 according to the present embodiment will be described below. FIG. 4 is a block diagram illustrating the functional configuration of a display system including the head-mounted display according to the embodiment.

To HMD 100, power source 91 and signal processing circuit 92 are connected via connector 75 and plug 75a. Power source 91 and signal processing circuit 92 are external devices connected to HMD 100.

Power source 91 is a device that supplies electric power for HMD 100 to perform various types of operation. Power source 91 is, for example, an AC-DC converter that converts household AC electric power to generate DC electric power of a voltage necessary for the operation of HMD 100. Power source 91 may be, for example, a battery that discharges accumulated electric power as DC electric power, a solar battery that supplies electric power generated from solar energy, or the like. Power source 91 as a battery may be built in HMD 100, or power source 91 as a solar battery may be attached to an outer surface of HMD 100. In HMD 100, the electric power supply may be performed by wireless transmission, without the use of plug 75a and connector 75.

Signal processing circuit 92 is a device that supplies, to HMD 100, image information that represents an image to be displayed through communication. Signal processing circuit 92 supplies the image information in the form of a digital signal but may supply the image information in the form of an analog signal. Alternatively, the image information may be stored in HMD 100, and the image may be displayed off-line, with plug 75a and connector 75 being disconnected. Alternatively, the image information generated in real time may be supplied successively to HMD 100 and displayed on-line, with the connection to plug 75a and connector 75 maintained. Alternatively, such image information may be also supplied through wireless communication.

As illustrated in FIG. 1, wiring 73 provided with, at its tip, connector 75 for performing at least one of the communication or the electric power supply described above is connected to second temple part 25 in the vicinity of the right ear of user 99 at the time of wearing HMD 100. Wiring 73 extends rearward of the right ear. For example, second rear temple part 26 of HMD 100 is connected to, for example, a connector box provided with connector 75 via wiring 73, which is designed to have a length of about 10 cm to 15 cm, from the viewpoint of positional graspability and handling.

The connector box is an operator of HMD 100 provided with connector 75. The connector box is provided with, for example, operation buttons that receive an input for operating HMD 100 from user 99 and an audio jack for extracting an audio signal. The electric power and the image information supplied from the external devices are transferred to drive circuit 38 via the internal wiring and the like. In more detail, the image information is transferred to drive circuit 38 via processor 38a as illustrated in FIG. 4. Processor 38a is a processing device that processes image information for displaying on display device 30 of HMD 100 to convert the image information into an analog signal and performs various processes of image adjustment. Processor 38a is implemented by a processor, a memory, and a program for image processing that is stored in the memory.

In this manner, an image is displayed on display device 30 based on the image information that reaches drive circuit 38 in the form of an analog signal. Specifically, display panel 39 is driven by drive circuit 38 and emits light representing an image. The light is concentrated by convex lens 40 and visually recognized by eyes 95 of user 99.

Drive circuit 38 is a circuit device for driving display panel 39. Display panel 39 is a device such as a liquid crystal panel, an organic EL panel, or a micro LED panel. Note that, in place of display device 30 with such drive circuit 38 and display panel 39, a laser projector of a retinal projection type or the like may be used as display device 30.

Here, FIG. 5A is a top view of a head-mounted display according to the embodiment. FIG. 5A illustrates a diagram of HMD 100 as viewed from the positive side in the Z-axis direction. In FIG. 5A, positions of the first rear temple part being bent are indicated as first position 16a and second position 16b.

As illustrated in FIG. 5A, with first eye cup 14 being in its original state, the second part being of first eye cup 14 and protruding long from first lens barrel 10 interferes with first rear temple part 16. As a result, first rear temple part 16 can be bent only up to first position 16a. From the viewpoint of improving portability of HMD 100, first rear temple part 16 may be bent up to second position 16b. This holds true for second rear temple part 26. Thus, in HMD 100, before the temple part is bent, an orientation of the eye cup is changed after detection of removal of HMD 100 from user 99.

FIG. 5B is a first diagram for describing an example of the orientation of the eye cup of the head-mounted display according to the embodiment. Note that illustration of components of HMD 100 excluding first eye cup 14 and part of first temple part 15 is omitted in FIG. 5B. For example, in HMD 100, when the removal of HMD 100 from user 99 is detected, the eye cup is rotated about the barrel axis to change the orientation. At this time, as illustrated in FIG. 5B for example, in HMD 100, the eye cup takes an orientation (hereinafter, will be taken as an example of a second orientation) that is rotated by 90 degrees about the barrel axis from an orientation of the eye cup of HMD 100 worn by user 99 (hereinafter, will be taken as a first orientation).

FIG. 5C is a second diagram for describing an example of the orientation of the eye cup of the head-mounted display according to the embodiment. Note that illustration of components of HMD 100 excluding first eye cup 14 and part of first temple part 15 is omitted in FIG. 5C. For example, in HMD 100, when the removal of HMD 100 from user 99 is detected, the eye cup is rotated about the barrel axis to change the orientation. At this time, as illustrated in FIG. 5C for example, in HMD 100, the eye cup takes an orientation (hereinafter, will be taken as an example of a second orientation) that is rotated by 180 degrees about the barrel axis from an orientation of the eye cup of HMD 100 worn by user 99 (hereinafter, will be taken as a first orientation).

In the present embodiment, the above-described rotation of the eye cup about the barrel axis causes a change in orientation from the first orientation in the wearing to the second orientation. Note that a rotation angle of the eye cup (i.e., a difference in angle between the first orientation and the second orientation) is not limited to 90 degrees or 180 degrees. The rotation angle of the eye cup will be described later in detail.

By changing the orientation of the eye cup after the detection of the removal of HMD 100 in this manner, the orientation of the eye cup is inhibited from being changed while user 99 is wearing HMD 100. To implement the above, HMD 100 includes a detector that detects whether HMD 100 is being worn by user 99 and drive mechanism 60 that brings a position of the rear temple part bent close to second position 16b by changing orientations of first eye cup 14 and second eye cup 24 to inhibit interference of first eye cup 14 and second eye cup 24 with the rear temple part.

The detector and drive mechanism 60 will be described with reference to FIG. 6. FIG. 6 is a perspective view illustrating a drive mechanism of the head-mounted display according to the embodiment. In FIG. 6, illustration of components excluding first rear temple part 16, drive mechanism 60, and first eye cup 14 is omitted.

As illustrated in FIG. 6, drive mechanism 60 is built in the temple part and includes some gears and rod 61 for driving these gears. Rod 61 is connected to first rear temple part 16 in the vicinity of first hinge portion 17. Rod 61 is pivotably fixed at a position shifted from a pivot axis of the first rear temple part. When first rear temple part 16 is pivoted, rod 61 moves rearward outside the pivot axis of first rear temple part 16. That is, rod 61 is pulled rea rwa rd.

The movement of rod 61 is then transferred to first gear 62. First gear 62 is a gear that rotates within an XY plane. First gear 62 is connected to rod 61 on the positive side in the X-axis direction. On the negative side in the X-axis direction, first gear 62 is formed with a crown gear for transferring motive power. As viewed from the positive side in the Z-axis direction, first gear 62 rotates counterclockwise when rod 61 is pulled rearward.

The rotation of first gear 62 is then transferred to second gear 63. Second gear 63 is a gear that rotates within a YZ plane. Second gear 63 is connected to first gear 62 on the positive side in the X-axis direction. On the negative side in the X-axis direction, second gear 63 is formed with a crown gear for transferring motive power. As viewed from the positive side in the X-axis direction, second gear 63 rotates clockwise when first gear 62 rotates counterclockwise as viewed from the positive side in the Z-axis direction.

The rotation of second gear 63 is then transferred to third gear 64. Third gear 64 is a gear that rotates within the XZ plane. Third gear 64 is connected to second gear 63 on the positive side in the X-axis direction. In the XZ plane, third gear 64 is formed with a spur gear for transferring motive power. As viewed from the positive side in the Y-axis direction, third gear 64 rotates counterclockwise when second gear 63 rotates clockwise as viewed from the positive side in the X-axis direction.

The rotation of third gear 64 is then transferred to support ring 65. Support ring 65 is an annular member that has a gear that rotates within the XZ plane. Support ring 65 is connected to third gear 64 on the positive side in the X-axis direction. On the positive side in the Y-axis direction, support ring 65 is connected to first eye cup 14. As viewed from the positive side in the Y-axis direction, support ring 65 rotates clockwise when third gear 64 rotates counterclockwise as viewed from the positive side in the Y-axis direction. With a gear ratio between support ring 65 and third gear 64, the rotation angle of first eye cup 14 can be set to 90 degrees as illustrated in FIG. 5B, 180 degrees as illustrated in FIG. 5C, or any angle that is not illustrated.

In use of HMD 100, the first part having the first length and the second part having the second length are placed side by side in the X-axis direction in first eye cup 14. When being bent to second position 16b, first rear temple part 16 intersects the barrel axis direction of first eye cup 14, extending in a direction parallel to a direction in which the first part and the second part are arranged as viewed from the positive side in the Y-axis direction. Thus, in the orientation of first eye cup 14 in the use of HMD 100 (the first orientation), the interference between first eye cup 14 and first rear temple part 16 illustrated in FIG. 5A will occur. In particular, the second part having the second length is placed on a side close to first temple part 15, in accordance with a curved surface of a face of user 99 extending from a front to a side of the face. That is, the second part is placed at a position closer to the pivot axis of first rear temple part 16. This further tends to bring about the interference illustrated in FIG. 5A.

In contrast, in HMD 100 in the present embodiment, as first rear temple part 16 is being bent, first eye cup 14 rotates in an interlocked manner, which makes the direction in which the first part and the second part are placed side by side not parallel to the direction in which first rear temple part 16 extends, as illustrated in FIG. 6. For example, in the case where the second orientation corresponds to a rotation angle of 90 degrees as illustrated in FIG. 5B, the direction in which the first part and the second part are placed side by side and the direction in which first rear temple part 16 extends intersect at 90 degrees. In other words, the direction in which the first part and the second part are placed side by side and the direction in which first rear temple part 16 extends intersects at an angle that corresponds to the rotation angle of the eye cup in the second orientation. As a result, the second part of first eye cup 14 leaves a spatial position through which first rear temple part 16 being bent extends in a direction that intersects the direction in which first rear temple part 16 extends. Accordingly, the interference between first rear temple part 16 and first eye cup 14 is inhibited, and first rear temple part 16 can be bent to second position 16b. In this manner, HMD 100 can become more compact with its temple parts bent. Thus, the portability of HMD 100 can be further increased.

For example, in the case where the second orientation corresponds to a rotation angle of 180 degrees as illustrated in FIG. 5C, the direction in which the first part and the second part are placed side by side and the direction in which first rear temple part 16 extends remain parallel to each other. However, positions of the first part and the second part of first eye cup 14 are switched. That is, the first part of first eye cup 14 is placed on a side closer to first temple part 15, and the second part is placed on a side farther from first temple part 15. The side farther from first temple part 15 is between first lens barrel 10 and second lens barrel 20, namely, at a position close to a center of HMD 100 in the arrangement direction.

In HMD 100, the temple parts extend in a curved manner along lateral curved surfaces of the face of user 99. Specifically, the temple parts each expand outward of HMD 100 at or in the vicinities of their centers and each contract inward of HMD 100 at their free ends (rear ends). For example, as illustrated in FIG. 5A, when being bent, first rear temple part 16 is curved at a position close to the center of HMD 100 in the arrangement direction in such a manner as to extend away from first lens barrel 10, namely, first eye cup 14. Therefore, in the case where the second orientation corresponds to a rotation angle of 180 degrees, the second part placed at a position close to the center of HMD 100 in the arrangement direction is received inside the curve that extends away from first eye cup 14. Therefore, in this case also, the interference between first rear temple part 16 and first eye cup 14 is inhibited, and first rear temple part 16 can be bent to second position 16b.

As seen from the above, the rotation angle of the eye cup in the second orientation may be any angle at which the eye cup after the orientation is changed does not interfere with the temple part being bent. For example, the second orientation can be set, in accordance with the length of the second part, as an orientation that corresponds to any angle that is with respect to the first orientation and is greater than 0 degrees and less than 360 degrees. Note that the above description about first eye cup 14 and first temple part 15 holds true for second eye cup 24 and second temple part 25.

In the example illustrated in FIG. 6, the detector is a detecting mechanism that includes the temple part and drive mechanism 60 and structurally detects a start of bending of the temple part, thus detecting the start as a state in which HMD 100 is removed from user 99. Therefore, the detector also functions as a driving source that drives rod 61.

In place of the detector that performs such structural detection, a detector that performs detection by sensing (i.e., a sensor) may be used. For example, to detect the start of bending of the temple part, a switch sensor is to be placed at a hinge portion and configured such that the switch sensor is pressed at the start of bending of the temple part. In this case, a signal produced when the switch sensor is pressed may be used to drive rod 61 with an actuator. In the case where the actuator is used, any component in drive mechanism 60 may be driven. For example, second gear 63 may be caused to rotate by a motor as the actuator (e.g., a motor similar to motor 66 illustrated in FIG. 10 described later).

An example in which the sensor performing detection by sensing is used will be described with reference to FIG. 7 to FIG. 10. FIG. 7 is a first diagram for describing a configuration of a sensor of the head-mounted display according to the embodiment.

In HMD 100 illustrated in FIG. 7, first panel 13 of first lens barrel 10 is removed, exposing an internal configuration of first panel 13. Here, inside first panel 13, first sound pickup device 53 and second sound pickup device 54 are disposed. First sound pickup device 53 and second sound pickup device 54 are disposed such that first sound pickup device 53 and second sound pickup device 54 collect sound entering through a gap between first panel 13 and first sub portion 12 after first panel 13 is attached. This makes these sound pickup devices difficult to be seen from the outside of HMD 100, and thus HMD 100 that is aesthetically excellent can be provided. In second lens barrel 20, a third sound pickup device and a fourth sound pickup device are disposed such that the third sound pickup device and the fourth sound pickup device are bilaterally symmetric with first sound pickup device 53 and second sound pickup device 54.

As illustrated in the figure, fifth sound pickup device 55 is disposed in first temple part 15, particularly in first front temple part 18. Fifth sound pickup device 55 is disposed such that fifth sound pickup device 55 collects, for example, sound that comes through a sound collection hole that is formed in a surface at a lower portion of first front temple part 18. This makes fifth sound pickup device 55 difficult to be seen from the outside of HMD 100, and thus HMD 100 that is aesthetically excellent can be provided. A sixth sound pickup device is disposed in second front temple part 28 such that the sixth sound pickup device and fifth sound pickup device 55 are bilaterally symmetric. The six sound pickup devices described above each collect ultrasound that is generated based on a specific frequency, period, timing, or the like (will be referred to also as specific ultrasound).

When using HMD 100, user 99 may hold, in the right and left hands, controllers in each of which a transmitter generating the specific ultrasound is built in. In this case, by collecting specific ultrasounds generated from the controllers with the six sound pickup devices, the relative positions of the controllers with respect to HMD 100 can be calculated from phase differences, arrival times, or the like. Since the controllers are held by the right and left hands of user 99, the motions of the hands of user 99 can be detected from the relative positions of the controllers. In this manner, HMD 100 can perform a process of, for example, making an input to content (e.g., changing video displayed on the display devices) based on the positions of the hands of user 99.

The above-described six sound pickup devices may be disposed away from one another. There are, however, restrictions on the disposition of the sound pickup devices because HMD 100 has a configuration in which the two lens barrels are supported by rod-shaped support member 41 in relation to the wearability for user 99 and the appearance properties. For that reason, in HMD 100, first sound pickup device 53 and second sound pickup device 54 are disposed at a lower end of first lens barrel 10 and an end portion of first lens barrel 10 on an opposite side to second lens barrel 20. In second lens barrel 20, the third sound pickup device and the fourth sound pickup device are disposed in the same disposition in a bilateral symmetry.

While four of the above-described sound pickup devices are arranged on substantially the same plane parallel to the XZ plane, fifth sound pickup device 55 is disposed in first front temple part 18 in such a manner as to be disposed at a position off the same plane. The sixth sound pickup device is similarly disposed in second front temple part 28. As seen from the above, the six sound pickup devices are disposed in such a manner as to be spaced away from one another within the limited constituent elements of HMD 100.

When a change in positional relationship between these sound pickup devices and the controllers, that is, an amount of change in a spatial position of HMD 100 is a predetermined amount or less that can be considered to be zero, the detector here detects the change as the state in which HMD 100 is removed from user 99. The detector then outputs a signal for driving drive mechanism 60, and drive mechanism 60 is driven with the actuator.

FIG. 8 is a second diagram for describing a configuration of a sensor of the head-mounted display according to the embodiment.

FIG. 8 illustrates HMD 100 in which eye tracker 81 including a light source and an imaging device is built inside first lens barrel 10. Eye tracker 81 is used to detect a direction of an eye gaze of user 99 looking at the display device in the lens barrel and is used to change content in accordance with the direction of the eye gaze of user 99. With eye tracker 81 described here, the removal of HMD 100 from user 99 can be detected. Specifically, when the detection of an eye gaze of user 99 with eye tracker 81 fails, the failure is detected as eye 95 of user 99 being out of a detectable range of the eye tracker, that is, the state in which HMD 100 is removed. The detector then outputs a signal for driving drive mechanism 60, and drive mechanism 60 is driven with the actuator.

FIG. 9 is a third diagram for describing a configuration of a sensor of the head-mounted display according to the embodiment.

FIG. 9 illustrates HMD 100 in which proximity sensor 71, which includes an infrared source and an imaging device, is built inside first rear temple part 16. With proximity sensor 71, the removal of HMD 100 from user 99 can be detected. Specifically, a state in which a distance between HMD 100 and user 99 measured by proximity sensor 71 is not equal to or less than a predetermined distance within which HMD 100 is considered to be worn by user 99 is detected as the state in which HMD 100 is removed from user 99. The detector then outputs a signal for driving drive mechanism 60, and drive mechanism 60 is driven with the actuator.

FIG. 10 is a fourth diagram for describing a configuration of a sensor of the head-mounted display according to the embodiment. Note that, in FIG. 10, drive mechanism 60, motor 66, power switch 67, and first eye cup 14 of another configuration are illustrated in the form of only their outlines with broken lines for viewability.

In HMD 100 illustrated in FIG. 10, a switch sensor is placed at power switch 67 to detect an end of use of HMD 100. When user 99 operates the power switch to bring about a power-off state, the switch sensor generates a signal. With this signal, motor 66 as an actuator can cause second gear 63 to rotate. As a result, drive mechanism 60 is driven. Note that electric power used for driving motor 66 after power off may be electric power stored in an electricity storage element such as a battery or a capacitor (both not illustrated). In the case where the power-off state of HMD 100 is simply a standby mode in which electric power can be conducted, electric power supplied from power source 91 via wiring 73 even after projection of a video on display panel 39 or the like has ended can be used.

### [Advantageous Effects etc.]

As described above, the display apparatus (HMD 100) according to the present embodiment is HMD 100 used by being worn by user 99, and includes: two lens barrels (first lens barrel 10 and second lens barrel 20) one of which includes a closed bottom and, on the closed bottom, a display device that displays a first image, and another one of which includes a closed bottom and, on the closed bottom, another display device that displays a second image; eye cups (first eye cup 14 and second eye cup 24) each of which is in a shape of a barrel and is disposed along an open end (an end portion on the positive side in the Y-axis direction) of a corresponding lens barrel among the two lens barrels; temple parts (first temple part 15 and second temple part 25) that are bendable and support the two lens barrels by being worn by user 99 in an extended state; at least one detector that detects whether HMD 100 is being worn by user 99; and drive mechanism 60 that changes an orientation of at least one eye cup among the eye cups from a first orientation to a second orientation when the at least one detector detects a state in which HMD 100 is removed from user 99. The first orientation is an orientation which allows user 99 to wear HMD 100 and is an orientation in which interference occurs between the at least one eye cup and at least one temple part among the temple parts when the at least one temple part is in a bent state, and the second orientation is an orientation in which no interference occurs between the at least one eye cup and the at least one temple part when the at least one temple part is in the bent state.

For example, when first temple part 15 is bent while first eye cup 14 is in the first orientation, first temple part 15 and first eye cup 14 interfere with each other, and when second temple part 25 is bent while second eye cup 24 is in the first orientation, second temple part 25 and second eye cup 24 interfere with each other. Therefore, in a conventional HMD, its temple parts cannot be folded to be compact. In the first orientation of the eye cup, particularly a cup part that extends along and covers a lateral side of eye 95 of user 99 up to a vicinity of ear 96 to improve light-shielding properties in use of HMD 100 (e.g., first cup part 14b in first eye cup 14) interferes with a spatial position of the temple part being bent.

In contrast, in HMD 100 as described above, first eye cup 14 and second eye cup 24 are changed into their second orientations after the detection of removal of HMD 100 from user 99, before first temple part 15 and second temple part 25 are bent. In the second orientations, first eye cup 14 and second eye cup 24 do not interfere with spatial positions of first temple part 15 and second temple part 25 being bent, respectively. Therefore, the temple parts can be bent without consideration given to interference between first temple part 15 and first eye cup 14 and interference between second temple part 25 and second eye cup 24. However, there may be a case where the second orientations are not appropriate for wearing HMD 100. Thus, in HMD 100, the eye cups are changed from their first orientations to their second orientations after the detection of removal of HMD 100 from user 99. In this manner, in HMD 100, its temple parts can be bent appropriately, which can make HMD 100 more compact. Thus, the portability of HMD 100 can be increased.

In addition, for example, each of the eye cups may include a first part and a second part that are connected in a shape of a barrel that shares a barrel axis direction with the corresponding lens barrel, the first part extending by a first length from the corresponding lens barrel in the barrel axis direction of the corresponding lens barrel, the second part extending by a second length from the corresponding lens barrel in the barrel axis direction of the corresponding lens barrel, the second length being greater than the first length, the temple parts, when in the bent state, may extend intersecting the barrel axis direction of the eye cups, at positions away from the two lens barrels by a length greater than the first length and less than the second length, and drive mechanism 60 may change positions of the first part and the second part of the at least one eye cup, by rotating the at least one eye cup about a barrel axis.

Accordingly, by drive mechanism 60 causing the eye cup to rotate about its barrel axis, it is possible to change the orientation of the eye cup from the first orientation to the second orientation. When the temple parts are bent, their rear temple parts (first rear temple part 16 and second rear temple part 26) extend intersecting the barrel axis directions (being along the arrangement direction). At this time, the spatial positions through which the rear temple parts extend are positions away from the lens barrels by a length greater than the first length and less than the second length. In the first orientation, the temple part and the second part are placed side by side in the arrangement direction. Thus, if the temple part is to be bent in the first orientation, the second part is present at the spatial position through which the rear temple part extends, and the rear temple part and the second part interfere with each other, hindering the bending. Therefore, drive mechanism 60 causes the eye cup to rotate, and the second part leaves from the spatial position through which the rear temple part extends, so that the temple part can be appropriately bent. The eye cup may rotate any number of times as long as at least the second part leaves the spatial position through which the rear temple part extends after being bent.

Note that a portion of each of the eye cups that is placed side by side with the temple part in the arrangement direction after drive mechanism 60 causes the eye cup to rotate is a portion that connects the first part and the second part. At least a length by which the portion extends from the lens barrel is shorter than the second part. A length by which the portion extends from the lens barrel may be longer than the first part or may be shorter than the first part. For example, the length by which the portion extends from the lens barrel may be such a length that the portion does not interfere with the spatial position through which the rear temple part being bent extends or may be a length that is simply less than the second length.

Furthermore, for example, the at least one detector may: be at least one sensor that detects a start of bending of at least one of the temple parts, as the state in which HMD 100 is removed from user 99; and output a signal for driving drive mechanism 60 based on a detection result.

Accordingly, the start of bending of the at least one of the temple parts causes a change in orientation of the eye cup from the first orientation to the second orientation.

Furthermore, for example, the at least one detector may: be at least one sensor that detects user 99 not being within a predetermined distance from HMD 100, as the state in which HMD 100 is removed from user 99; and output a signal for driving drive mechanism 60 based on a detection result.

Accordingly, user 99 not being within the predetermined distance from HMD 100 causes a change in orientation of the eye cup from the first orientation to the second orientation.

Furthermore, for example, the at least one detector may: be at least one sensor that detects an amount of change in a spatial position of HMD 100 being a predetermined amount or less, as the state in which HMD 100 is removed from user 99; and output a signal for driving drive mechanism 60 based on a detection result.

Accordingly, the amount of change in the spatial position of HMD 100 being the predetermined amount or less causes a change in orientation of the eye cup from the first orientation to the second orientation.

Furthermore, for example, the at least one detector may: be at least one sensor that detects a failure to detect the eye gaze direction of user 99 looking at the display devices, as the state in which HMD 100 is removed from user 99; and output a signal for driving drive mechanism 60 based on a detection result.

Accordingly, the failure to detect the eye gaze direction of user 99 looking at the display devices causes a change in orientation of the eye cup from the first orientation to the second orientation.

Furthermore, for example, the at least one detector may: be detection mechanisms each of which is provided in a corresponding temple part among the temple parts and detects a start of bending of the corresponding temple part, as the state in which the display apparatus is removed from the user; and may drive the at least one drive mechanism by transmitting an external force applied to the display apparatus for bending at least one of the temple parts.

Accordingly, the start of bending of the corresponding temple part causes a change in orientation of the eye cup from the first orientation to the second orientation. In particular, the detector (the detecting mechanism) serves as a motive power source for driving drive mechanism 60, thus eliminating the need of providing an additional motive power source such as an actuator, an additional power source for operating the motive power source, and the like. This brings an advantage such as making HMD 100 low-cost and light.

### [Other Embodiments]

The embodiment and the like have been described above. However, the present disclosure is not limited to the above embodiment and the like.

In the above embodiment and the like, the constituent elements of the HMD have been exemplified. However, the functions of the constituent elements included in the HMD may be allocated in any manner to a plurality of elements constituting the HMD.

The present disclosure also encompasses other forms achieved by making various modifications conceivable to those skilled in the art to the embodiments etc. and forms implemented by arbitrarily combining constituent elements and functions of the embodiments etc. without departing from the essence of the present disclosure.

### [Industrial Applicability]

The present disclosure is useful as a wearable display apparatus such as a head-mounted display.

### [Reference Signs List]

- 10: first lens barrel
- 11: first main portion
- 12: first sub portion
- 13: first panel
- 14: first eye cup
- 14a: first insertion part
- 14b: first cup part
- 14c: first narrow portion
- 14d: first thick portion
- 14e: first flat portion
- 15: first temple part
- 16: first rear temple part
- 17: first hinge portion
- 18: first front temple part
- 19, 29: cover
- 20: second lens barrel
- 21: second main portion
- 22: second sub portion
- 23: second panel
- 24: second eye cup
- 25: second temple part
- 26: second rear temple part
- 27: second hinge portion
- 28: second front temple part
- 30: display device
- 31: adjusting mechanism
- 32: adjusting member
- 32a: knob member
- 33, 34: thread portion
- 35, 36: threaded hole
- 38: drive circuit
- 38a: processor
- 39: display panel
- 40: convex lens
- 41: support member
- 41a: internal wiring
- 53: first sound pickup device
- 54: second sound pickup device
- 55: fifth sound pickup device
- 60: drive mechanism
- 61: rod
- 62: first gear
- 63: second gear
- 64: third gear
- 65: support ring
- 66: motor
- 67: power switch
- 71: proximity sensor
- 73: wiring
- 75: connector
- 75a: plug
- 81: eye tracker
- 91: power source
- 92: signal processing circuit
- 95: eye
- 96: ear
- 99: user
- 100: HMD

## Claims

1. A display apparatus used by being worn by a user, the display apparatus comprising:
two lens barrels one of which includes a closed bottom and, on the closed bottom, a display device that displays a first image, and another one of which includes a closed bottom and, on the closed bottom, another display device that displays a second image;
eye cups each of which is in a shape of a barrel and is disposed along an open end of a corresponding lens barrel among the two lens barrels;
temple parts that are bendable and support the two lens barrels by being worn by the user in an extended state;
at least one detector that detects whether the display apparatus is being worn by the user; and
at least one drive mechanism that changes an orientation of at least one eye cup among the eye cups from a first orientation to a second orientation when the at least one detector detects a state in which the display apparatus is removed from the user,
wherein the first orientation is an orientation which allows the user to wear the display apparatus and is an orientation in which interference occurs between the at least one eye cup and at least one temple part among the temple parts when the at least one temple part is in a bent state, and
the second orientation is an orientation in which no interference occurs between the at least one eye cup and the at least one temple part when the at least one temple part is in the bent state.

2. The display apparatus according to claim 1,
wherein each of the eye cups includes a first part and a second part that are connected in a shape of a barrel that shares a barrel axis direction with the corresponding lens barrel, the first part extending by a first length from the corresponding lens barrel in the barrel axis direction of the corresponding lens barrel, the second part extending by a second length from the corresponding lens barrel in the barrel axis direction of the corresponding lens barrel, the second length being greater than the first length,
the temple parts, when in the bent state, extend intersecting the barrel axis direction of the eye cups, at positions away from the two lens barrels by a length greater than the first length and less than the second length, and
the at least one drive mechanism changes positions of the first part and the second part of the at least one eye cup, by rotating the at least one eye cup about a barrel axis.

3. The display apparatus according to claim 1 or 2,
wherein the at least one detector:
is at least one sensor that detects a start of bending of at least one of the temple parts, as the state in which the display apparatus is removed from the user; and
outputs a signal for driving the at least one drive mechanism based on a detection result.

4. The display apparatus according to claim 1 or 2,
wherein the at least one detector:
is at least one sensor that detects the user not being within a predetermined distance from the display apparatus, as the state in which the display apparatus is removed from the user; and
outputs a signal for driving the at least one drive mechanism based on a detection result.

5. The display apparatus according to claim 1 or 2,
wherein the at least one detector:
is at least one sensor that detects an amount of change in a spatial position of the display apparatus being a predetermined amount or less, as the state in which the display apparatus is removed from the user; and
outputs a signal for driving the at least one drive mechanism based on a detection result.

6. The display apparatus according to claim 1 or 2,
wherein the at least one detector:
is at least one sensor that detects a failure to detect an eye gaze direction of the user looking at the display devices, as the state in which the display apparatus is removed from the user; and
outputs a signal for driving the at least one drive mechanism based on a detection result.

7. The display apparatus according to claim 1 or 2,
wherein the at least one detector:
is detection mechanisms each of which is provided in a corresponding temple part among the temple parts and detects a start of bending of the corresponding temple part, as the state in which the display apparatus is removed from the user; and
drives the at least one drive mechanism by transmitting an external force applied to the display apparatus for bending at least one of the temple parts.
